# EUROPÄISCHE PATENTSCHRIFT

(11) **EP 0 364 825 B1**
(45) Veröffentlichungstag und Bekanntmachung des Hinweises auf die Patenterteilung: **07.01.1993**
(21) Anmeldenummer: 89118502.7
(22) Anmeldetag: 05.10.1989
(51) Int. Cl.: C21C 5/46, F27D 23/02, G01N 1/12

(54) **Vorrichtung zur diskontinuierlichen Messdatenerfassung der Schmelze**
Apparatus for taking discontinuous measurements on molten metal
Appareil pour obtenir des mesures discontinues dans un bain de métal fondu

(30) Priorität: 07.10.1988 DE 3834245
(43) Veröffentlichungstag der Anmeldung: 25.04.1990
(73) Patentinhaber: VOEST-ALPINE INDUSTRIEANLAGENBAU GESELLSCHAFT m.b.H., A-4020 Linz (AT)
(72) Erfinder: Moser, Peter, A-4045 Linz (AT); Weber, Alfred, A-4222 St. Georgen (AT)
(74) Vertreter: Glawe, Delfs, Moll & Partner

(56) Entgegenhaltungen:
- EP-A- 0 079 290
- DE-A- 2 206 590
- DE-A- 3 106 234
- GB-A- 1 008 829
- SOVIET INVENTIONS WEEKLY, Section Chemistry, week C 12, 30th April 1980, class J 09, no. 21724 C712, Derwent Publications Ltd., London, GB

## Beschreibung

Die Erfindung betrifft eine Vorrichtung zur diskontinuierlichen Meßdatenerfassung der Schmelze in einem metallurgischen Gefäß, insbesondere in einem Schmelzaggregat oder einem Tiegel zur Durchführung des Frischvorganges, bestehend aus einem auf einer Fahrbahn angeordneten Lanzenschlitten, der eine Meßlanze trägt, die von einer Warteposition außerhalb des metallurgischen Gefäßes durch eine im Mantel des metallurgischen Gefäßes vorgesehene Durchtrittsöffnung in eine Meß- und Probenahmeposition im Inneren des metallurgischen Gefäßes bringbar ist.

In Tiegelanlagen muß der Frischvorgang durch Temperaturmessungen der Schmelze und durch Probenahmen zwecks Analyse der Schmelze überwacht werden. Dies erfolgt üblicherweise mittels einer Meßlanze, die am in die Schmelze eintauchenden Ende mit einer auswechselbaren Meßkartusche bestückt wird. In der Fachwelt wird dieses System als Sublanzensystem bezeichnet.

Üblicherweise ist die Meßlanze parallel zur Blaslanze angeordnet und wird von oben durch den Tiegelmund kurzzeitig in die Schmelze eingetaucht. Bei kleinen Tiegelgrößen und damit geringem Tiegelmunddurchmesser ist diese Anordnung aus geometrischen und meßtechnischen Gründen nicht möglich. Um diesem Problem auszuweichen, wurde in der EP-A1 79 290 bereits vorgeschlagen, die auf einem Lanzenschlitten montierte und mit dem Lanzenschlitten in Längsrichtung bewegbare Meßlanze durch eine seitliche Öffnung in der Tiegelwand in den Tiegel zur Temperaturmessung oder Probenahme einzufahren.

Während des Frischvorganges kommt es zum Aufschäumen der Schlacke, in manchen Fällen zum Überkochen, wobei die Durchtrittsöffnung durch Schlacke verlegt wird. Beim Durchstoßen der Mantelöffnung mit der Meßlanze besteht dann die Gefahr, daß die Meßkartusche beschädigt wird.

Aufgabe der Erfindung ist es daher diese Nachteile zu vermeiden und eine Vorrichtung vorzuschlagen, bei der das störungsfreie Einbringen der mit der Meßkartusche bestückten Meßlanze in ein metallurgisches Gefäß stets gewährleistet ist.

Die Aufgabe wird dadurch gelöst, daß die Meßlanze auf dem Lanzenschlitten in einem Überschubrohr axialverschiebbar geführt ist und daß das Überschubrohr an dem in das metallurgische Gefäß einbringbaren Ende ein Reinigungswerkzeug trägt. Damit ist es möglich, den Innenraum der Mantelöffnung ohne Zeitverlust und in einem gemeinsamen Arbeitsgang mit dem Einbringen der Meßlanze in den Tiegel von Schlackenansätzen zu befreien.

Da der Verscheiß des Reinigungswerkzeuges gering ist, ist es wirtschaftlich, daß das in das metallurgische Gefäß einbringbare Ende des Überschubrohres selbst als Reinigungswerkzeuges ausgebildet ist.

Um Schäden durch das Eindringen von Schlacke in den Spalt zwischen Überschubrohr und Meßlanze zu vermeiden ist es vorteilhaft, daß das Überschubrohr an seiner Innenwand mit mindestens drei Führungsleisten bestückt ist an denen die Meßlanze geführt wird.

Um die Innenmantelfläche der Mantelöffnung beim Einbringen des Überschubrohres in das metallurgische Gefäß und auch die Meßlanze selbst von Schlackenansätzen zu reinigen, ist das Reinigungswerkzeug so ausgebildet, daß die Außenmantelfläche und die Stirnfläche(n) des Überschubrohres die Schneidkante(n) zur Reinigung der Durchtrittsöffnung bilden und daß die Innenmantelflächen und die Stirnflächen der Führungsleisten die Schneidkanten zur Reinigung des Meßlanzenschaftes bilden.

Die Meßlanze wird nach einer bevorzugten Ausführungsform dadurch bewegt, daß die im Überschubrohr geführte Meßlanze auf einem Stützwagen befestigt ist der auf dem Lanzenschlitten verfahrbar angeordnet ist.

Um die Ausmauerung der Durchtrittsöffnung im metallurgischen Gefäß mit dem Reinigungwerkzeug nicht auszubrechen ist es vorteilhaft, daß in die Durchtrittsöffnung des metallurischen Gefäßes ein Einführstutzen eingesetzt ist.

Um ein exaktes Einführen des Überschubrohres in den Einführstutzen zu gewährleisten ist es vorteilhaft, daß der Einführstutzen an der Außenseite des metallurgischen Gefäßes trichterartig erweitert ist.

Um das Austreten von Schlacke durch den Einführstutzen zu vermeiden ist es vorteilhaft, daß der Einführstutzen mit einer Verschlußeinrichtung, vorzugsweise einer Klappe oder einem Schieber, versehen ist.

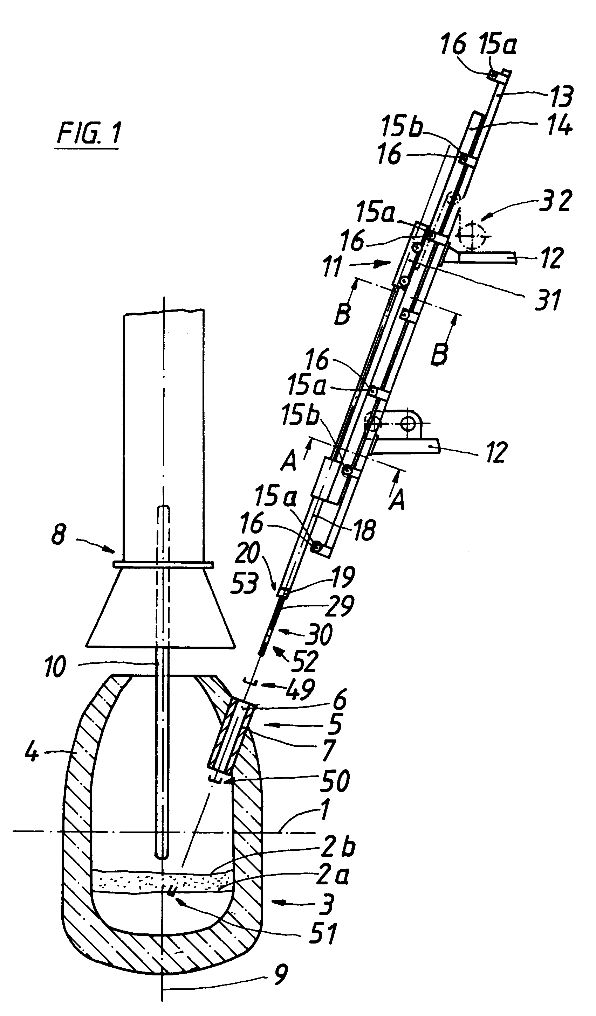

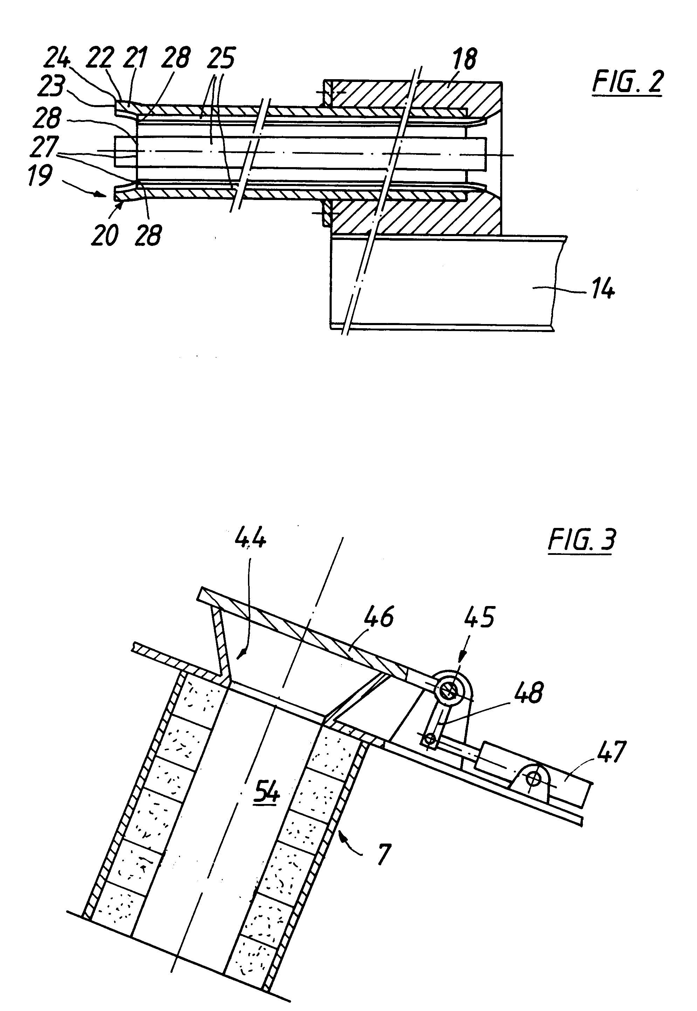

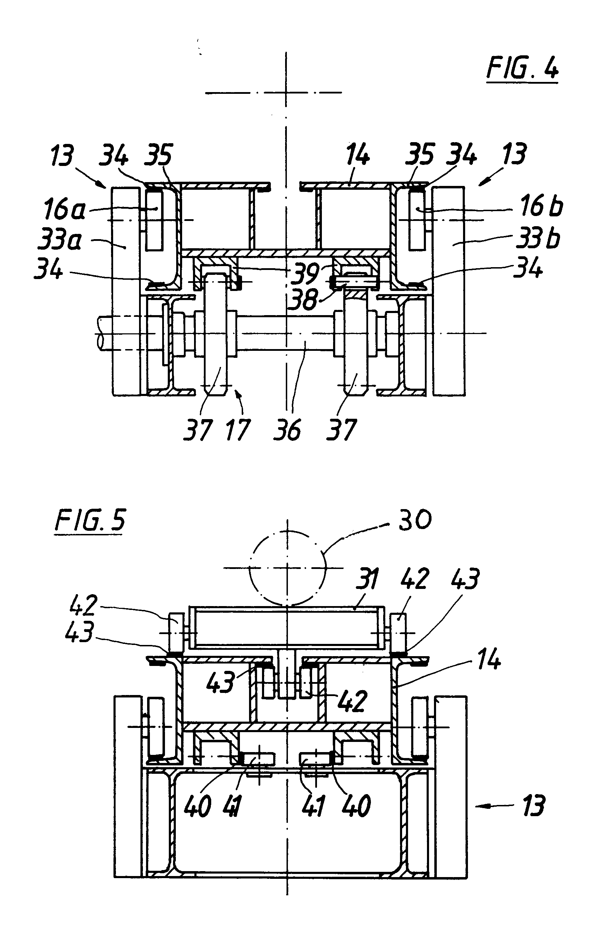

Die Erfindung ist nachfolgend anhand der Zeichnungen näher erläutert. Fig. 1 zeigt eine Ansicht einer Tiegelanlage mit der Vorrichtung zur Meßdatenerfassung und Probennahme. Fig. 2 zeigt einen Längsschnitt durch das mit dem Reinigungswerkzeug versehenen Überschubrohr. Fig. 3 zeigt den prinzipiellen Aufbau des Einführstutzens mit einer Verschlußeinrichtung. Fig. 4 zeigt den Lanzenschlitten anhand des Schnittes A-A in Fig. 1. Fig. 5 zeigt den auf dem Lanzenschlitten verfahrbaren Stützwagen anhand des Schnittes B-B in Fig. 1.

In Fig. 1 ist eine Tiegelanlage schematisch dargestellt. Ein um eine Kippachse (1) schwenkbarer bis zum Niveau (2a) mit Schmelze und bis zum Niveau (2b) mit Schlacke gefüllter Tiegel (3), weist in seinem Mantel (4) im Tiegelhutbereich (5) eine Durchtrittsöffnung (6) auf, die als Einführstutzen (7) ausgebildet ist. Oberhalb des Tiegels ist eine kaminartige Absaugung (8) angeordnet, die am nicht dargestellten Hallentragwerk befestigt ist. Die Vertikalachse (9) des Tiegels ist gleichzeitig auch die Achse der vertikal verfahrbaren Blaslanze (10) zur Durchführung des Frischvorganges.

Seitlich oberhalb des Tiegels ist die erfindungsgemäße Vorrichtung zur Meßdatenerfassung (11) positioniert. Auf einem am Hallentragwerk (12) befestigten Fahrrahmen (13) ist der Lanzenschlitten (14) in einer Führung, die von in wechselnder Höhenlage (15a, 15b) angeordneten Rädern (16) gebildet wird, verfahrbar angeordnet und kann mit einer Triebstockverzahnung (17) in die gewünschte Position gebracht werden.

Auch jedes andere Antriebssystem für den Lanzenschlitten, das eine genaue Positionierung erlaubt, ist denkbar. Der Lanzenschlitten trägt ein Überschubrohr (18) mit einem Reinigungswerkzeug (19), wobei das Ende (20) des Überschubrohres als Reinigungswerkzeug (19) ausgebildet ist. Es ist auch möglich das Reinigungswerkzeug am Überschubrohr stirnseitig zu befestigen.

Das Überschubrohr (18) mit dem angesetzten Reinigungswerkzeug (19) ist in Fig. 2 näher erläutert. Das Überschubrohr ist am Lanzenschlitten (14) befestigt. An dem dem metallurgischen Gefäß zugewandten Ende (20) ist das Überschubrohr (18) aufgeweitet und mit Fortsätzen (21) versehen. Die Außenmantelflächen (22) und Stirnflächen (23) der Fortsätze (21) bilden wirksamen Schneidkanten (24). Die Innenseite des Überschubrohres ist mit Führungsleisten (25) bestückt, die mit ihren Innenmantelflächen (26) die Meßlanze führen und in deren Endbereich die Innenmantelflächen und die Stirnfläche (27) jeder Leiste eine wirksame Schneidkante (28) bildet. Mit diesem Reinigungswerkzeug (19) ist es möglich sowohl die Innenwand des Einführstutzens (7) als auch den Meßlanzenschaft (29) von Schlackenansätzen zu reinigen. Das vom metallurgischen Gefäß abgewandte Ende der Meßlanze ist auf einem Stützwagen (31) befestigt, der auf dem Lanzenschlitten (14) mit einem Seilzug (32) relativ zum Lanzenschlitten (14) bewegbar ist.

Die Fahrrahmen (13) wurden von Trägern (33a, 33b) gebildet, entlang denen Räder (16, 16a, 16b) in unterschiedlichen Höhenlagen (15a, 15b) angeordnet sind. Die Räder (16, 16a, 16b) sind mit Schienen (34), die am Ober- und Untergurt von Rahmenteilen (35) des Lanzenschlitten (14) befestigt sind, in Eingriff. Der Lanzenschlitten (14) wird von einem nicht dargestellten E-Motor über eine Welle (36) auf der Zahnräder (37) einer Triebstockverzahnung (17) angeordnet sind, angetrieben. Diese Zahnräder (37) sind mit Triebstöcken (38) in Eingriff die an der Unterseite des Lanzenschlitten (14) in Halterungen (39) befestigt sind. Die Halterungen (39) weisen Schienen (14) auf, und sind mit am Fahrrahmen (13) befestigten Rädern (41) im Eingriff. Sie dienen der Seitenführung des Lanzenschlitten.

Die in Fig. 5 strichpunktiert angedeutete Meßlanze (30) ist auf einem Stützwagen (14) befestigt, der Räder (42) aufweist, die mit Schienen (43) am Lanzenschlitten (14) zusammenwirken. Die Anordung der Räder (42) ist so gewählt, daß Kippmomente aufgefangen werden.

Der Einführstutzen (7) ist in Fig. 3 dargestellt und weist an der Außenseite des metallurgischen Gefäßes eine trichterartige Erweiterung (44) auf, die das Einbringen des Überschubrohres (18) erleichtert. Der Einführstutzen (7) ist mit einer Verschlußeinrichtung (45), die als Klappe (46) ausgebildet ist, versehen. Die Klappe (46) ist von einem Druckmittelzylinder (47) über ein Hebelsystem (48) verbunden und kann geöffnet werden, wenn das Überschubrohr eingebracht werden soll.

Diese Vorrichtung ist nicht nur bei einer Tiegelanlage anwendbar, sondern beispielsweise auch bei einem Elektroofen. In diesem Fall wird die Vorrichtung vorteilhaft vertikal oder schräg durch den Deckel des Ofengefäßes eingebracht.

Die Funktionsweise der Einrichtung ist folgende: Während des Frischvorganges befindet sich die Meßlanzeneinrichtung (11) in einer Warteposition (49) knapp oberhalb des Einführstutzens (7) des vertikal stehenden Tiegels (3). Wenn eine Messung bzw. Probenahme vorgenommen werden soll, fährt der Lanzenschlitten (14) mit dem Überschubrohr (18) bei eingezogener Meßlanze (30) in den Einführstutzen (7) und reinigt diesen. Die Meßlanze (30) wird im Inneren des Überschubrohres geschützt mitgefahren. Nachdem das Überschubrohr (18) nach dem Durchtritt durch den Einführstutzen in der Halteposition (50) angehalten wird, wird die Meßlanze (30) in die Meß- und Probenahmeposition (51) gebracht und die Probe gezogen. Beim Rückziehen der Meßlanze (30) in den Schutz des Überschubrohres (18) werden etwaige am Meßlanzenschaft (29) anhaftende Schlackenspritzer von den innenliegenden Schneiden (28) des Reinigungswerkzeuges (19) entfernt. Anschließend kann das Überschubrohr (18) mit dem Lanzenschlitten (14) zurückgezogen werden. In der Wechselposition (52) wird die Meßlanze (30) soweit ausgefahren, daß die Meßkartusche (53) gewechselt werden kann. Dann wird wieder die Warteposition (49) angefahren.

## Patentansprüche

1. Vorrichtung zur diskontinuierlichen Meßdatenerfassung der Schmelze in einem metallurgischen Gefäß (3), insbesondere in einem Schmelzaggregat oder einem Tiegel zur Durchführung des Frischvorganges, bestehend aus einem auf einem Fahrrahmen (13) angeordneten Lanzenschlitten (14), der eine Meßlanze (30) trägt, die von einer Warteposition (49) außerhalb des metallurgischen Gefäßes durch eine im Mantel (4) des metallurgischen Gefäßes (3) vorgesehene Durchtrittsöffnung in eine Meß- oder Probenahmeposition (51) im Inneren des metallurgischen Gefäßes bringbar ist, dadurch **gekennzeichnet**, daß die Meßlanze (30) auf dem Lanzenschlitten (14) in einem Überschubrohr (18) axial verschiebbar geführt ist und daß das Überschubrohr (18) an dem in das metallurgische Gefäß einbringbaren Ende ein Reinigungswerkzeug (19) zum Reinigen der Durchtrittsöffnung trägt.

2. Vorrichtung nach Anspruch 1, **dadurch gekennzeichnet**, daß das in das metallurgische Gefäß einbringbare Ende des Überschubrohres (18) selbst als Reinigungswerkzeug (18) ausgebildet ist.

3. Vorrichtung nach den Ansprüchen 1 oder 2 **dadurch gekennzeichnet,** daß das Überschubrohr (18) an seiner Innenwand mit mindestens drei Führungsleisten (25) bestückt ist, an denen die Meßlanze (30) geführt wird.

4. Vorrichtung nach einem oder mehreren der Ansprüche 1 bis 3 **dadurch gekennzeichnet,** daß die Außenmantelfläche (22) und die Stirnfläche(n) (23) des Überschubrohres (18) die Schneidkante(n) (24) zur Reinigung der Durchtrittsöffnung bilden und daß die Innenmantelflächen (26) und die Stirnflächen (27) der Führungsleisten (25) die Schneidkanten (28) zur Reinigung des Meßlanzenschaftes (29) bilden.

5. Vorrichtung nach einem oder mehreren der Ansprüche 1 bis 4 **dadurch gekennzeichnet,** daß die im Überschubrohr (18) geführte Meßlanze (30) auf einem Stützwagen (31) befestigt ist, der auf dem Lanzenschlitten (14) verfahrbar angeordnet ist.

6. Vorrichtung nach einem oder mehreren der Ansprüche 1 bis 5 **dadurch gekennzeichnet,** daß in die Durchtrittsöffnung (6) des metallurgischen Gefäßes (3) ein Einführstutzen (7) eingesetzt ist.

7. Vorrichtung nach Anspruch 6 **dadurch gekennzeichnet,** daß der Einführstutzen (7) an der Außenseite des metallurgischen Gefäßes trichterartig erweitert ist.

8. Vorrichtung nach den Ansprüchen 6 oder 7 **dadurch gekennzeichnet,** daß der Einführstutzen (7) mit einer Verschlußeinrichtung (45), vorzugsweise mit einer Klappe (46) oder einem Schieber, versehen ist.

## Claims

1. An apparatus for the discontinuous acquisition of data from the melt in a metallurgical vessel (3), in particular in a melting unit or a crucible for carrying out the refining process, comprising a lance slide (14) mounted on a travelling frame (13) and carrying a measuring lance (30) which can be moved from a waiting position (49) outside the metallurgical vessel through an opening provided in the shell (4) of the metallurgical vessel (3) into a measuring or sampling position (51) inside the metallurgical vessel, characterised in that the measuring lance (30) is guided for axial displacement on the lance slide (14) in a sleeve tube (18) and in that, at its end which can be introduced into the metallurgical vessel, the sleeve tube (18) is provided with a cleaning implement (19) for cleaning the opening.

2. An apparatus according to Claim 1, characterised in that the end of the sleeve tube (18) which can be introduced into the metallurgical vessel is itself in the form of a cleaning implement (18) [sic].

3. An apparatus according to Claim 1 or 2, characterised in that, on its inner wall, the sleeve tube (18) is provided with at least three guide strips (25) on which the measuring lance (30) is guided.

4. An apparatus according to one or more of Claims 1 to 3, characterised in that the outer circumferential surface (22) and the end face(s) (23) of the sleeve tube (18) form the cutting edge(s) (24) for cleaning the opening and in that the inner circumferential surfaces (26) and the end faces (27) of the guide strips (25) form the cutting edges (28) for cleaning the shank (29) of the measuring lance.

5. An apparatus according to one or more of Claims 1 to 4, characterised in that the measuring lance (3) guided in the sleeve tube (18) is mounted on a support carriage (31) which is arranged movably on the lance slide (14).

6. An apparatus according to one or more of Claims 1 to 5, characterised in that an insert stub (7) is fitted into the opening (6) in the metallurgical vessel (3).

7. An apparatus according to Claim 6, characterised in that the insert stub (7) is enlarged in the manner of a funnel on the outside of the metallurgical vessel.

8. An apparatus according to Claim 6 or 7, characterised in that the insert stub (7) is provided with a closure device (45), preferably with a flap (46) or a slide member.

## Revendications

1. Dispositif pour la saisie discontinue de données de mesure du bain de fusion dans un récipient métallurgique (3), notamment dans un appareil de fusion ou un creuset, en vue d'effectuer l'opération d'affinage, composé d'un chariot de lance (14) disposé sur un châssis de roulement (13) et portant une lance de mesure (30) qui, à partir d'une position d'attente (49) à l'extérieur du récipient métallurgique, peut être amenée, au travers d'un orifice de passage prévu dans l'enveloppe (4) du récipient métallurgique (3), dans une position (51) de mesure ou de prélèvement d'échantillons à l'intérieur du récipient métallurgigue, caractérisé en ce que la lance de mesure (30) est guidée de manière axialement coulissante, sur le chariot de lance (14), dans un tube formant manchon de coulissement (18), et en ce que le tube formant manchon de coulissement (18) porte, à l'extrémité pouvant être introduite dans le récipient métallurgigue, un outil de nettoyage (19) destiné à nettoyer l'orifice de passage.

2. Dispositif selon la revendication 1, caractérisé en ce que l'extrémité du tube formant manchon de coulissement (18), susceptible d'être introduite dans le récipient métallurgigue, est réalisée elle-même en tant qu'outil de nettoyage (19).

3. Dispositif selon les revendications 1 ou 2, caractérisé en ce que le tube formant manchon de coulissement (18) est pourvu sur sa paroi intérieure, d'au moins trois glissières de guidage (25) sur lesquelles est guidée la lance de mesure (30).

4. Dispositif selon l'une ou plusieurs des revendications 1 à 3, caractérisé en ce que la surface périphérique extérieure (22) et la ou les surface(s) frontale(s) du tube formant manchon de coulissement (18), forment l'arête ou les arêtes coupante(s) (24) de nettoyage de l'orifice de passage, et en ce que les surfaces périphériques intérieures (26) et les surfaces frontales (27) des glissières de guidage (25), forment les arêtes coupantes (28) de nettoyage de la tige de lance (29).

5. Dispositif selon l'une ou plusieurs des revendications 1 à 4, caractérisé en ce que la lance de mesure (30) guidée dans le tube formant manchon de coulissement (18), est fixée sur un chariot de support (31) qui est monté de manière déplaçable sur le chariot de lance (14).

6. Dispositif selon l'une ou plusieurs des revendications 1 à 5, caractérisé en ce que dans l'orifice de passage (6) du récipient métallurgigue (3) est monté un embout d'introduction (7).

7. Dispositif selon la revendication 6, caractérisé en ce que l'embout d'introduction ( 7 ) s'évase en forme d'entonnoir sur le côté extérieur du récipient métallurgique.

8. Dispositif selon les revendications 6 ou 7, caractérisé en ce que l'embout d'introduction (7) est pourvu d'un dispositif de fermeture (45), de préférence un clapet (46) ou un tiroir.
